# EUROPEAN PATENT APPLICATION

(11) **EP 4 810 537 A1**
(43) Date of publication of application: **23.09.2026**
(21) Application number: 25165158.4
(22) Date of filing: 20.03.2025
(51) Int. Cl.: C08G 59/30

(54) **CURABLE COMPOSITIONS FOR THE FORMATION OF FLAME-RETARDANT VITRIMERS**

(71) Applicant: Airbus S.A.S., 31700 Blagnac Cedex (FR)
(72) Inventor: Beier, Uwe, 82024 Taufkirchen (DE); Hübner, Fabian, 82024 Taufkirchen (DE); Carré, Camille, 82024 Taufkirchen (DE); Meer, Thomas, 82024 Taufkirchen (DE); Machunze, Wolfgang, 82024 Taufkirchen (DE)
(74) Representative: Isarpatent

(57) **Abstract**

The present invention relates to a composition, a vitrimer produced using such a composition, the use of such a vitrimer, as well as a method of manufacturing a vitrimer.

## Description

### TECHNICAL FIELD OF THE INVENTION

The present invention relates to a composition, a vitrimer produced using such a composition, the use of such a vitrimer, as well as a method of manufacturing a vitrimer.

### TECHNICAL BACKGROUND

Disulfide epoxy resins are a class of thermosetting polymers that combine the chemical and thermal robustness of epoxy resins with the meltable properties of thermoplastic polymers via disulfide linkages. This offers improved performance in various industrial applications as well as processing, repair and recycling opportunities. The incorporation of disulfide groups (R-S-S-R) into the resin structure enhances or does not diminish the material's chemical resistance, thermal stability, and mechanical strength, while enabling the development of new functionalities such as self-healing capabilities and enhanced stress relaxation. These resins are synthesized through the reaction of disulfide-containing epoxy and/or amine compounds, leading to the formation of cross-linked networks. The disulfide bonds within the polymer matrix can undergo reversible exchange reactions under specific conditions, making them potential candidates for applications in the automotive, aerospace, and electronics industries, where durability, recyclability, and high-performance properties are essential. Especially in aerospace applications, other targets such as high thermal and mechanical stability have to be fulfilled. Depending on the inside or outside use of a civil aircraft or helicopter, some properties have to be higher than others. Especially for interiors or cable housings of commercial aircraft, the flame retardancy (FR) behavior of resins used for part structures such as hatracks, seats, flooring or sidewalls needs to be outstanding. This comes from high requirements for safety in case of evacuation in case of fire.

For interior, state of the art material used is glass fiber fabric with impregnated phenolic resins, in a combination with phenolic impregnated honeycomb as lightweight sandwich core. Furane resins, epoxy resins among others are under development as regard their flame retardant properties. While the reinforcing fiber is giving strength and does not significantly contribute to flammability of the part, the impregnated polymer matrix is usually flammable due to its organic nature. Phenolic and furane resins are inherent flame retardant while epoxy resins need to be equipped with extrinsic flame retardants such as phosphorous (co-)polymers such as DOPO (9,10-dihydro-9-oxa-10-phosphaphenanthrene-10-oxide), salts (ammonium polyphosphate, APP) or inorganic (silicon dioxide, SiO₂) fillers.

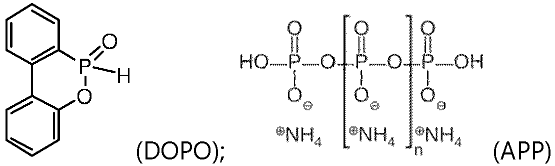

DOPO, a widely studied phosphorus-based flame retardant, is known for its high efficiency in improving the flame resistance of polymers. It works by promoting the formation of a protective char layer, interrupting the combustion process, and reducing the release of flammable gases, see J. Wagner, Halogenfreie Flammschutzmittelmischungen für Polystyrol-Schäume, Doctoral Thesis, Ruprecht-Karls-University Heidelberg, 2012.

Similar approaches have already been investigated with epoxy composites based on disulfide bonds, see X. Li et al., Composites Communications (2021), 25, 100754. However, to achieve a sufficient amount of FR activity by additives such as DOPO, a high amount is usually necessary which diminishes thermal stability (in particular glass transition temperature, Tg), reduces or significantly elevates modulus, increases water-uptake and majorly impairs processability and compatibility to other part components.

### SUMMARY OF THE INVENTION

In order to overcome the above drawbacks, the present invention aims to improve the properties of disulfide vitrimers and uncured mixtures for forming such vitrimers by using disulfide-containing flame retardants. Disulfide-containing functional FR hybrid molecules can be cross-linked into the vitrimer networks and do not significantly diminish Tg or modulus of elasticity. Disulfide-containing vitrimer epoxy resins can be used synergistically with flame retardants such as disulfide-modified DOPO. Due to the disulfide dynamic covalent bonds, they can undergo reversible cross-linking and rearrangement processes under certain conditions. As such, a mechanical strengthening of the substrate in the solid phase is achieved. The present invention also provides enhanced recyclability and reprocessing of the disclosed materials. Since the vitrimers according to the invention can be reprocessed through heat and pressure without losing their structural integrity, the inclusion of disulfide-containing flame retardants can maintain the material's flame-retardant properties even after multiple cycles of processing. The present invention further provides healability and durability of the disclosed materials. The dynamic nature of the vitrimers according to the invention also allows for self-healing in the presence of thermal degradation or damage while maintaining flame resistance through the flame retardant's continuous presence in the material matrix.

An aspect of the invention relates to a composition comprising a resin forming compound comprising an epoxy group and/or an amine group, optionally a curing agent, and a first flame retardant comprising a disulfide group. At least one of the resin forming compound or the curing agent also comprises a disulfide group.

Further disclosed is a method of manufacturing a polymeric network and/or vitrimer. The method comprises providing a composition according to the above aspect, and polymerizing, co-polymerizing, cross-linking and/or curing the composition to obtain the polymeric network and/or vitrimer.

Further disclosed is a vitrimer or composite, produced using the composition of the above aspect. Additionally, the invention relates to the use of such a vitrimer as adhesive, matrix resin or for surface functionalization, in particular in aircraft composites.

Further aspects and embodiments of the invention are disclosed in the dependent claims and can be taken from the following description, figures and examples, without being limited thereto.

### DESCRIPTION OF EXEMPLARY EMBODIMENTS

### Definitions

Unless defined otherwise, technical and scientific terms used herein have the same meaning as commonly understood by one of ordinary skill in the art to which this invention belongs.

Before the invention is described in exemplary detail, it is to be understood that this invention is not limited to the particular component parts of the process steps of the methods described herein as such methods may vary. It is also to be understood that the terminology used herein is for purposes of describing particular embodiments only, and is not intended to be limiting. It must be noted that, as used in the specification and the appended claims, the singular forms "a", "an" and "the" include singular and/or plural referents unless the context clearly dictates otherwise. For example, the term "a" as used herein can be understood as one single entity or in the meaning of "one or more" entities. It is also to be understood that plural forms include singular and/or plural referents unless the context clearly dictates otherwise.

As used herein, the terms "comprises", "comprising", "contains", "containing", "includes", "including", "has", "having" or any other variation thereof, are intended to cover a non-exclusive inclusion. For example, a process, method, article, or apparatus that comprises a list of elements is not necessarily limited to only those elements, but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The use of the term "at least one" or "one or more" will be understood to include one as well as any quantity more than one. In addition, the use of the phrase "at least one of X, Y, and Z" will be understood to include X alone, Y alone, and Z alone, as well as any combination of X, Y, and Z.

The use of ordinal number terminology (i.e., "first", "second", "third", "fourth", etc.) is solely for the purpose of differentiating between two or more items and, unless explicitly stated otherwise, is not meant to imply any sequence or order or importance to one item over another or any order of addition.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

As used herein, 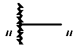 and 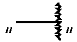 mean that the group or compound shown is linked to the neighboring group or compound of the respective structure via a covalent bond. For L₂ of Formula (I), for example, this means that the compounds or groups shown for L₂ are bound to A or E₁ at the position labelled with the corresponding symbol.

If a bond crosses or is "drawn over" another bond of a ring shown, such as 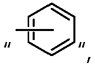 this means that the bond in question can be at any possible position of the ring.

As used herein, 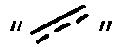 means that the bond can be a single bond ("/") or a double bond

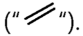

In a first aspect, the present invention relates to a composition. According to some embodiments, the composition is a curable composition and/or an uncured composition. This means that the composition is capable to form a hardened, thermoset material when exposed to suitable curing conditions, such as heat and/or the addition of a curing agent, which initiates a polymerization and/or cross-linking reaction. The composition comprises a resin forming compound comprising an epoxy group or two or more epoxy groups. Alternatively or in addition, the composition comprises a resin forming compound comprising an amine group or two or more amine groups. The resin forming compound is capable of forming a resin and/or a polymeric network and/or a polymer and/or a vitrimer through reaction and/or cross-linking of the epoxy and/or amine groups. The composition further comprises a flame retardant comprising a disulfide group. In certain embodiments, the composition further comprises a curing agent. The curing agent may comprise at least two functional groups capable of reacting with the resin forming compound, in particular with the epoxy and/or amine group of the resin forming compound. According to certain embodiments, the functional groups are selected from the group consisting of hydroxyl groups, epoxy groups, amine groups and thiol groups. At least one of the resin forming compound and/or the curing agent comprises a disulfide group. More specifically, when the composition comprises only the resin forming compound and the flame retardant, the resin forming compound comprises a disulfide group. When the composition comprises the resin forming compound, the curing agent and the flame retardant, either the resin forming compound or the curing agent or both the resin forming compound and the curing agent may comprise a disulfide group. In the context of the present invention "comprising a disulfide group" means that the compound or substance in question contains a disulfide group which is covalently bound in the structure of the compound or substance. In some embodiments, the flame retardant is referred to as the first flame retardant. This is particularly the case when further flame retardants may be present in the composition.

The composition provides the advantages and technical effects as described above. In particular, the polymeric networks, vitrimers and composites formed from the compositions according to the invention show improved flame retardant properties, excellent Tg and modulus of elasticity. The inventors surprisingly found a synergism between the flame retardant groups, such as organophosphorus moieties, and the disulfide groups present in the flame retardant to further improve the flame retardant effect. In addition, the polymeric networks, vitrimers and composites formed from the compositions according to the invention show enhanced recyclability, reprocessing, self-healing and durability. Without being bound to any particular theory, it is assumed that this is due to the presence of the disulfide group in both the flame retardant and the resin forming compound and/or curing agent, whereby the flame retardant is grafted into the polymeric network or vitrimer through the disulfide groups, which leads, inter alia, to improved Tg, modulus, flame retardancy and retention of flame retardancy during recycling. In addition, the flame retardant is covalently bonded to the polymer network and cannot unintentionally volatilize over time or in the event of a fire.

The flame retardant is not further limited as long as it has a flame retardant effect and a disulfide group. In some embodiments, the flame retardant is an organic compound. In some embodiments, the flame retardant is selected from the group consisting of 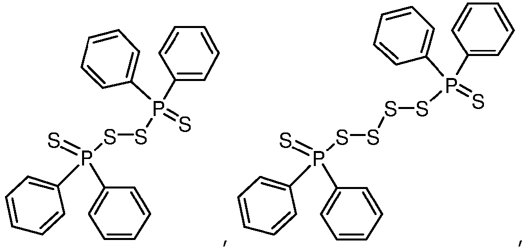 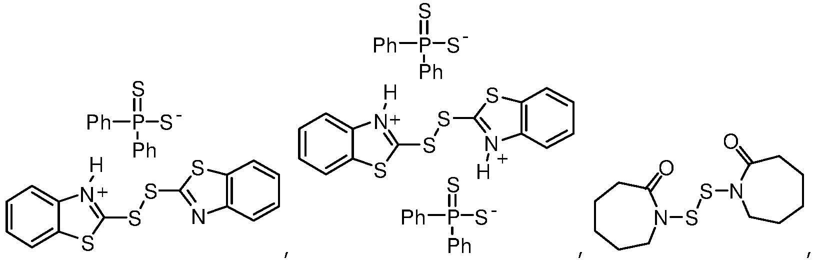 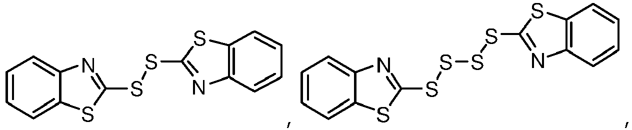 a flame retardant compound according to Formula (I): 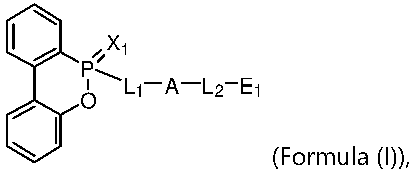 a flame retardant compound according to Formula (II): 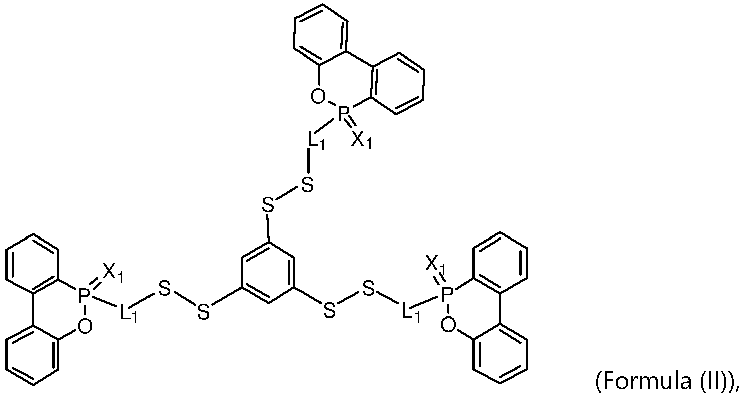 and combinations thereof. In Formulas (I) and (II), X₁ is O or S, A is a disulfide-containing group, L₁ and L₂ are linking groups, and E₁ is selected from the group consisting of 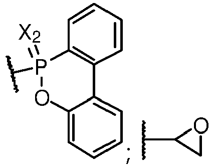 and 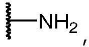 wherein X₂ is O or S. In the groups shown for E₁, 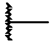 may mean that E₁ is covalently bound to L₂ at this position. The "linking groups" may refer to chemical moieties that covalently connect the disulfide groups with the DOPO or DOPS moiety. The linking groups may comprise or consist of C1 to C30 alkyl groups, C1 to C30 alkylene groups, C6 to C30 aryl groups, C8 to C30 aralkyl groups, C2 to C15 ether groups, C2 to C15 thioether groups, C2 to C15 ester groups, C2 to C15 amide groups, C2 to C15 imide groups, or C2 to C15 urethane groups, and combinations thereof. In these embodiments, the above-mentioned advantages and effects of the invention are particularly pronounced.

In Formula (I), A may be selected from the group consisting of 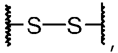 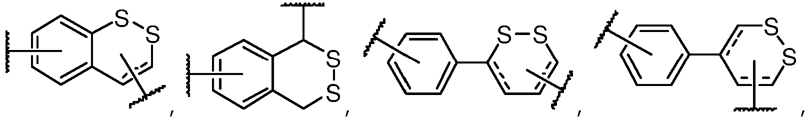 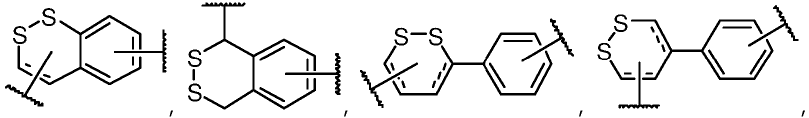 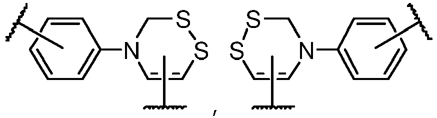 and analogue structures with four, five, seven and/or eight-membered rings, preferably five and/or seven membered rings and more preferably five-membered rings. In this context, "analogue structures" refer to cyclic structures shown for A, but with at least one of the six-membered rings replaced by a four, five-, seven- or eight-membered ring. An example for such an analogue structure is 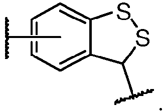 In the groups shown for A, 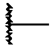 may mean that A is covalently bound to L₁ at this position and 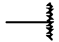 may mean that A is covalently bound to L₂ at this position.

In Formulas (I) and (II), L₁ may be selected from the group consisting of 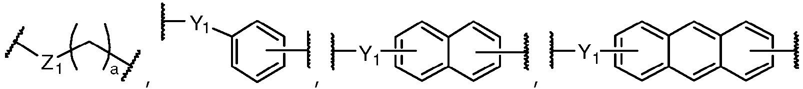 and 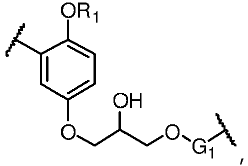 with a being an integer from 1 to 5, preferably 1 to 3 and more preferably, a is 1. In the groups shown for L₁, 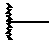 may mean that L₁ is covalently bound to the phosphorous atom of the DOPO or DOPS moiety at this position and 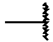 may mean that L₁ is covalently bound to A at this position. Z₁ and Y₁ may each be independently selected from the group consisting of a bond, especially a covalent bond, 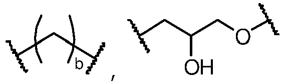 and 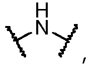 with b being an integer from 1 to 5, preferably 1 to 3 and more preferably, b is 1. In the groups shown for Z₁, 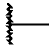 may mean that Z₁ is covalently bound to the phosphorous atom of the DOPO or DOPS moiety at this position and 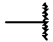 may mean that Z₁ is covalently bound to the alkyl group at this position. In the groups shown for Y₁, 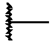 may mean that Y₁ is covalently bound to the phosphorous atom of the DOPO or DOPS moiety at this position and 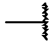 may mean that Y₁ is covalently bound to the aromatic group at this position. G₁ may be selected from the group consisting of 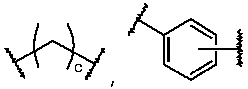 and 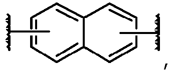 with c being an integer from 1 to 5, preferably 1 to 3. In the groups shown for G₁, 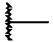 may mean that G₁ is covalently bound to the oxygen atom at this position and 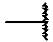 may mean that G₁ is covalently bound to A at this position. R₁ may be selected from the group consisting of H, C₁ to C₁₀, preferably C₁ to C₃ alkyl, C₆ to C₂₀, preferably C₆ to C₁₀ aryl and 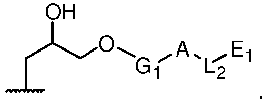 A, G₁ and E₁ may be as defined above and L₂ may be as defined below. In the group shown for R₁, 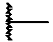 may mean that R₁ is covalently bound to the oxygen atom.

Furthermore, in Formulas (I) and (II), L₂ may be selected from the group consisting 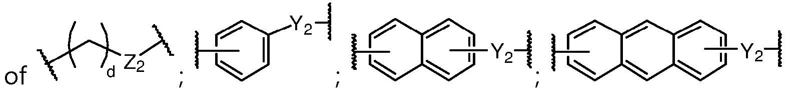 and 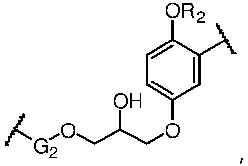 with d being an integer from 1 to 5, preferably 1 to 3 and more preferably, d is 1. In the groups shown for 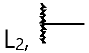 may mean that L₂ is covalently bound to A at this position and 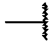 may mean that L₂ is covalently bound to E₁ at this position. G₂ may be selected from the group consisting of 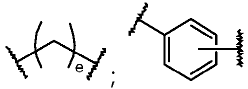 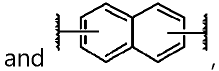 with e being an integer from 1 to 5, preferably 1 to 3. In the groups shown for 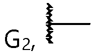 may mean that G₂ is covalently bound to A at this position and 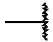 may mean that G₂ is covalently bound to the oxygen atom at this position. R₂ may selected from the group consisting of H, C₁ to C₁₀, preferably C₁ to C₃ alkyl, C₆ to C₂₀, preferably C₆ to C₁₀ aryl.

According to some embodiments, E₁ is 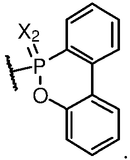 In this case, Z₂ and Y₂ may each be independently selected from the group consisting of a bond, especially a covalent bond, 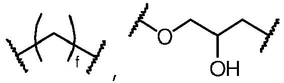 and 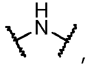 with f being an integer from 1 to 5, preferably 1 to 3 and more preferably, f is 1. In the groups shown for Z₂, 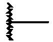 may mean that Z₂ is covalently bound to the alkyl group at this position and 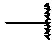 may mean that Z₂ is covalently bound to the phosphorous atom of the DOPO or DOPS moiety at this position. In the groups shown for 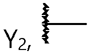 may mean that Y₂ is covalently bound to the aromatic group at this position and 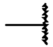 may mean that Y₂ is covalently bound to the phosphorous atom of the DOPO or DOPS moiety at this position. In certain embodiments, E₁ is 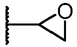 or 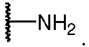 In this case, Z₂ and Y₂ may each be independently selected from the group consisting of a bond, especially a covalent bond, 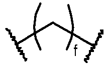 and 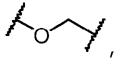 with f being an integer from 1 to 5, preferably 1 to 3 and more preferably, f is 1. In the group shown for 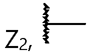 may mean that Z₂ is covalently bound to the alkyl group at this position and 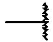 may mean that Z₂ is covalently bound to E₁ at this position. In the group shown for Y₂, 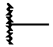 may mean that Y₂ is covalently bound to the aromatic group at this position and 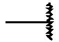 may mean that Y₂ is covalently bound to E₁ at this position.

According to some embodiments, the aromatic and/or aliphatic groups of A, L₁ and/or L₂ are optionally substituted with C₁ to C₆, preferably C₁ to C₃ alkyl groups, C₆ to C₂₀, preferably C₆ to C₁₀ aryl groups, C₆ to C₂₀, preferably C₁ to C₁₀ heteroaryl groups, hydroxyl groups, thiol groups, C₁ to C₁₀, preferably C₁ to C₃ ether groups and/or C₁ to C₁₀, preferably C₁ to C₃ ester groups and/or combinations thereof. In certain embodiments, X₁ and/or X₂ is O and preferably, X₁ and X₂ are both O. In further preferred embodiments, E₁ is 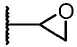 or 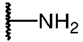 and more preferably 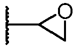 . According to certain embodiments, A is selected from the group consisting of 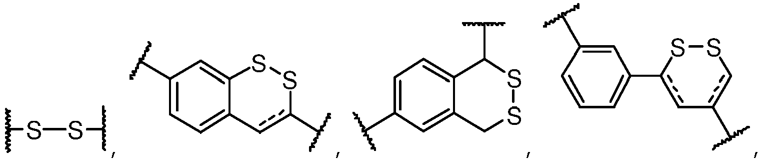 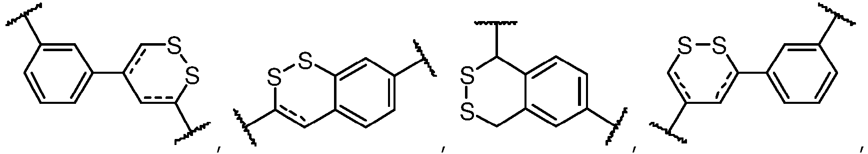 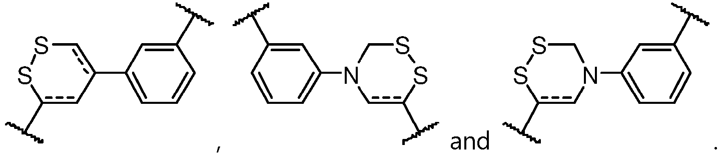 In preferred embodiments, A is 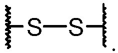 In some embodiments, L₁ is selected from the group consisting of

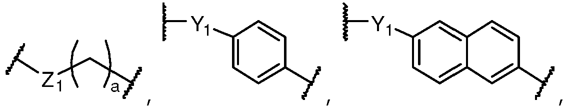

According to preferred embodiments, L₁ is selected from the group consisting of 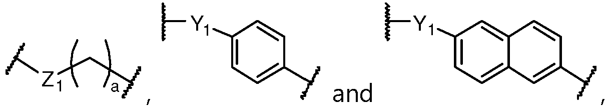 more preferably from 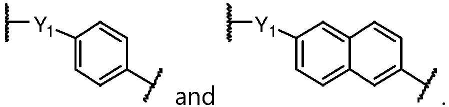 According to preferred embodiments, Z₁ and Y₁ are each independently selected from the group consisting of a bond, 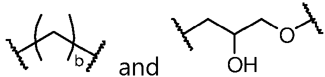 and more preferably, Z₁ and/or Y₁ is 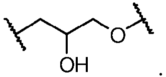 In certain embodiments, G₁ is selected from the group consisting of 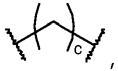 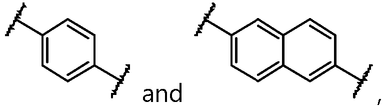 and more preferably from 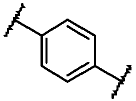 and 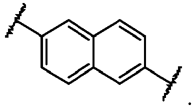 In preferred embodiments, R₁ is H or 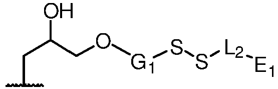 and more preferably, R₁ is H. In these embodiments, the above-mentioned advantages and effects of the invention are particularly pronounced.

In some embodiments, L₂ is selected from the group consisting of 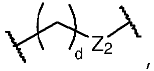 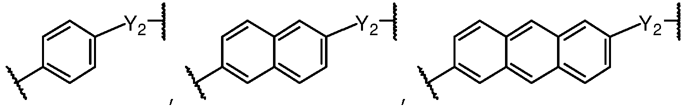 and 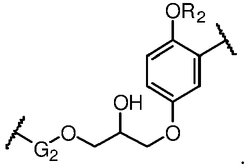 According to preferred embodiments, , L₂ is selected from the group consisting of 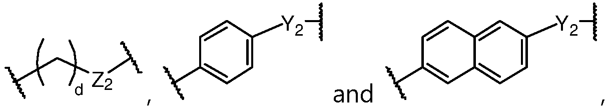 and more preferably from 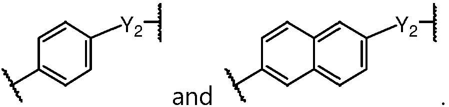 When E₁ is 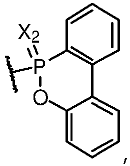 Z₂ and Y₂ can preferably be independently selected from the group consisting of a bond, 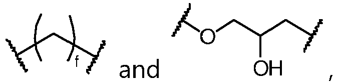 and more preferably, Z₂ and/or Y₂ may be 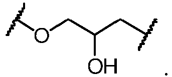 When E₁ is 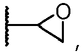 Z₂ and/or Y₂ can preferably be 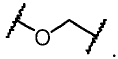 When E₁ is 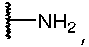 Z₂ and/or Y₂ can preferably be a bond or 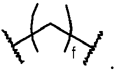 In certain embodiments, G₂ is selected from the group consisting of 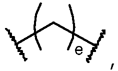 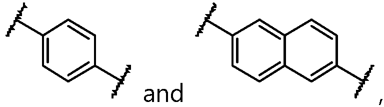 and more preferably from 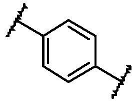 and 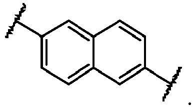 In preferred embodiments, R₂ is H. In these embodiments, the above-mentioned advantages and effects of the invention are particularly pronounced.

In some embodiments, the flame retardant compound according to Formula (I) is a flame retardant compound according to Formula (la) 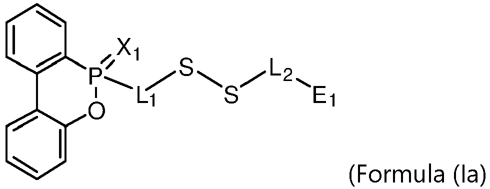 wherein X₁, L₁, L₂ and E₁ are defined as above.

In certain embodiments, the flame retardant compound according to Formula (I) is 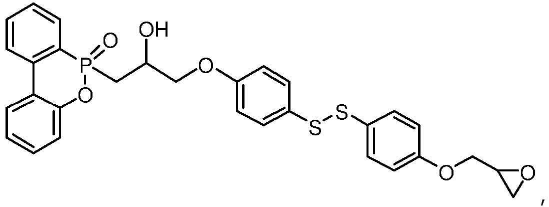 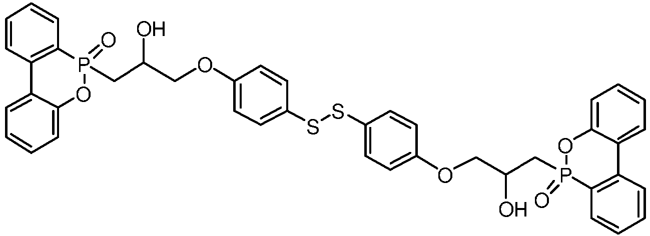 or 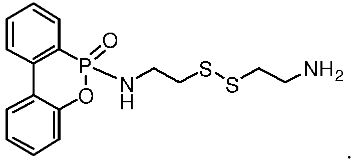 Alternatively or in addition, the compound according to Formula (II) may be 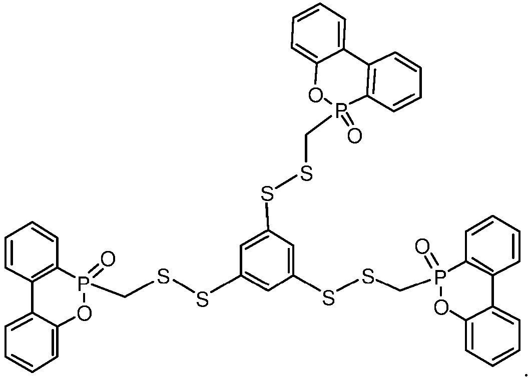 In these embodiments, the above-mentioned advantages and effects of the invention are particularly pronounced.

According to some embodiments, the flame retardant is an organophosphorus compound and/or comprises an organophosphorus moiety. In preferred embodiments, the flame retardant is selected from the group consisting of 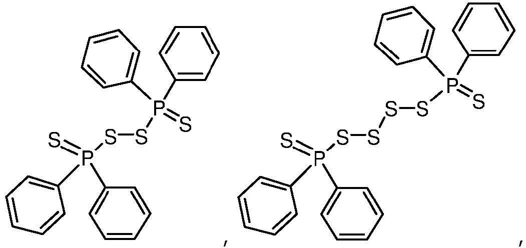 a flame retardant compound according to Formula (I), a flame retardant compound according to Formula (II) and combinations thereof. In further preferred embodiments, the flame retardant is a flame retardant compound according to Formula (I) or a flame retardant compound according to Formula (II). In these embodiments, the above-mentioned advantages and effects of the invention are particularly pronounced, in particular the flame-retardant effect and the improved Tg.

In some embodiments, the resin forming compound is a vitrimer monomer and in particular a disulfide vitrimer monomer. For example, the vitrimer monomer may comprise at least one disulfide group and at least one resin forming group, in particular an epoxy group or an amine group. According to certain embodiments, the resin forming compound is a vitrimer oligomer, in particular a disulfide vitrimer oligomer. In this context, "vitrimer oligomer" may refer to a molecular compound consisting of 2 to 49 repeating vitrimer monomers and especially disulfide vitrimer monomers. According to some embodiments, the resin forming compound is a vitrimer pre-polymer. In this context, "vitrimer pre-polymer" may refer to an intermediate compound with a lower molecular weight than a final polymer, consisting of vitrimer monomers and/or vitrimer oligomers capable of further polymerization or crosslinking to form the final polymer. Pre-polymers may be in a partially polymerized state and can undergo additional chemical reactions to form a high-molecular-weight polymer and/or a final polymer.

According to some embodiments, the resin forming compound comprises an epoxy group. Alternatively or in addition, the curing agent may comprise an amine group. In certain embodiments, the resin forming compound is selected from the group consisting of 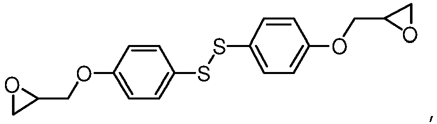 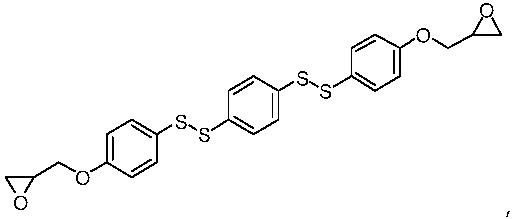 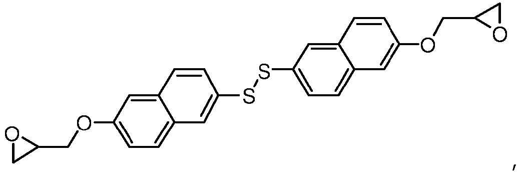 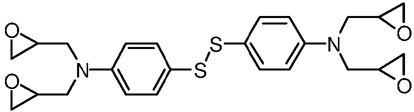 and combinations thereof. In some embodiments, the curing agent is 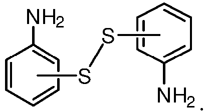 According to certain embodiments, the curing agent is selected from the group consisting of 3,3'-diaminodiphenyl sulfone, 4,4'-diaminodiphenyl sulfone, 4,4'-methylenedianiline, isopropylamine, diisopropylamine, methyldiethanolamine, 2,2'-dithiodianiline, 3,3'-dithiodianiline, 4,4'-dithiodianiline, 2,3'-dithiodianiline, 2,3'-dithiodianiline and 3,4'-dithiodianiline. In these embodiments, the above-mentioned advantages and effects of the invention are particularly pronounced.

According to some embodiments, the composition further comprises a tackifying agent. In this context, a "tackifying agent" may refer to a compound capable of enhance the tackiness or adhesion of the composition or polymeric network or vitrimer. The tackifying agent comprises an epoxy group or an amine group. In preferred embodiments, the tackifying agent further comprises a disulfide group. Such a tackifying agent can crosslink or be crosslinked into the polymeric network and/or vitrimer, which enhances pressure and or temperature sensitive adhesion promotion to a substrate. The tackifying agent may have a linear structure.

According to preferred embodiments, the tackifying agent is selected from the group consisting of 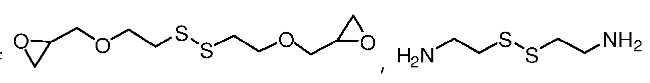 and combinations thereof. In this embodiments, the adhesion promotion of the composition, polymeric network and/or vitrimer can be further enhanced.

In some embodiments, the composition further comprises a chain extender and/or cross-linker. The chain extender and/or cross-linker comprises at least two thiol groups. The presence of such a chain extender and/or cross-linker further improves the cross-linking and the vitrimeric properties of the polymer network and/or vitrimer and further enhances the bonding of the flame retardant to the polymer network and/or vitrimer. According to preferred embodiments, the chain extender and/or cross-linker is selected from the group consisting of 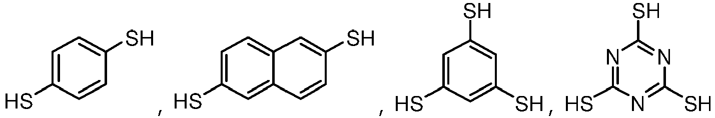 and combinations thereof. In these embodiments, the above-mentioned advantages and effects of the invention are particularly pronounced. The chain-extender and/or cross-linker can be used to form the following structure, for example:

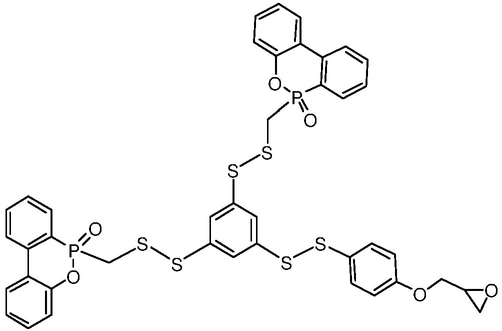

In some embodiments, the composition further comprises tougheners and/or additives. The tougheners and/or additives may comprise functional groups that can be grafted into the network via the existing disulfide groups. According to certain embodiments, the tougheners and/or additives are selected from the group consisting of siloxanes, rubbers, polyamides and polyethersulfone. In preferred embodiments, the toughener and/or additive is polyethersulfone. In certain embodiments, the composition comprises a second flame retardant. The above-mentioned flame retardant is then referred to as first flame retardant. The second flame retardant may be selected from the groups consisting of ammonium polyphosphate (APP), silicon dioxide (SiO₂) and combinations thereof. In these embodiments, the above-mentioned advantages and effects of the invention are particularly pronounced.

In some embodiments, the composition consists of the resin forming compound and the flame retardant. In certain embodiments, the composition consists of the resin forming compound, the curing agent and the flame retardant. According to some embodiments, the composition consists of the resin forming compound, the curing agent, the flame retardant and the tackifying agent. In certain embodiments, the composition consists of the resin forming compound, the curing agent, the flame retardant, the tackifying agent and the chain extender and/or cross-linker. In certain embodiments, the composition consists of the resin forming compound, the curing agent, the flame retardant the tackifying agent, the chain extender and/or cross-linker and at least one of the toughener, additive and second flame retardant.

The composition of the present invention can be polymerized and/or cross-linked and/or cured in order to form and/or produce a polymeric network and/or a vitrimer and/or a composite material. The composition may be polymerized by the epoxy groups present in the compounds. Alternatively or in addition, the compounds of the composition may be cross-linked, for example by the curing agent, tackifying agent, chain extender and/or cross-linker. According to certain embodiments, the composition may be polymerized by the epoxy and amine groups present in the compounds, for example by polyaddition and/or step-growth polymerization. Alternatively or in addition, the composition may be cured by the epoxy and amine groups present in the compounds. According to some embodiments, the compounds of the composition may be cross-linked by disulfide-disulfide exchange reactions. Alternatively or in addition, some of the compounds present in the composition may be prepolymerized to form a pre-polymer and the pre-polymer subsequently reacted with the remaining compounds of the composition to obtain a polymeric network and/or a vitrimer.

The composition of the present invention can be cured. Alternatively or in addition, the composition of the present invention can be applied to a substrate and then cured. Curing can be carried out, for example, by temperature treatment and/or the addition of an initiator and/or a catalyst.

In a second aspect, the present invention relates to a method of manufacturing a polymeric network and/or a vitrimer. The method may comprise the steps of providing a composition according to the first aspect of the invention and polymerizing, co-polymerizing, cross-linking and/or curing the composition to obtain an oligomer and/or a polymer and/or the polymeric network and/or the vitrimer. Reference is made to the above statements on the first aspect of the invention, which apply analogously here. In certain embodiments, the method is a method of manufacturing a vitrimer and comprises the steps of providing the composition according to the first aspect of the invention and curing the composition to obtain the vitrimer.

The polymerization of the compound and/or composition is not particularly limited. According to certain embodiments, the polymerization is selected from the group consisting of polyaddition and step-growth polymerization.

In a third aspect, the present invention relates to a method of manufacturing a composite, comprising the steps of providing a composition according to the first aspect of the present invention, applying the composition to a substrate and curing and/or polymerizing and/or cross-linking the composition to obtain the composite. Reference is made to the above statements on the first and second aspects of the invention, which apply analogously here. In some embodiments, the substrate comprises or consists of a material selected from the group consisting of a thermoplastic, a thermoset, a metal and a ceramic.

In a fourth aspect, the present invention relates to a polymeric network or vitrimer or composite, produced using the composition according to the first aspect of the invention. In some embodiments, the polymeric network or vitrimer is produced by the method according to the second aspect of the invention. In some embodiments the composite is produced by the method according to the third aspect of the invention. In some embodiments, the polymeric network or vitrimer is produced by curing and/or polymerizing and/or cross-linking the composition according to the first aspect of the invention. Reference is made to the above statements on the first, second and third aspects of the invention, which apply analogously here.

In a fifth aspect, the present invention relates to a polymeric network or vitrimer or composite, obtainable and/or obtained from the composition according to the first aspect of the invention. In some embodiments, the polymeric network or vitrimer is obtainable and/or obtained through the method according to the second aspect of the invention. In some embodiments the composite is obtainable and/or obtained through the method according to the third aspect of the invention. In some embodiments, the polymeric network or vitrimer is obtainable and/or obtained through curing and/or polymerizing and/or cross-linking the composition according to the first aspect of the invention. Reference is made to the above statements on the first, second, third and fourth aspects of the invention, which apply analogously here.

In a sixth aspect, the present invention relates to a composite, comprising a substrate and at least one vitrimer covalently bound to the substrate. In some embodiments, the at least one vitrimer is a vitrimer according to the fourth or fifth aspect of the invention. In some embodiments, the substrate comprises or consists of a material selected from the group consisting of a thermoplastic, a thermoset, a metal and a ceramic. The substrate may be in the form of a core or a layer. In some embodiments, the material is activated before forming the covalent bond, e.g. by thermal activation, irradiation, etc. This may especially be the case if the material is a metal or ceramic. The activation may be conducted to provide functional groups for forming the covalent bond. According to certain embodiments, the substrate comprises or consists of a thermoplastic or a thermoset, or mixtures thereof, preferably a thermoset. In some embodiments, the covalent bond between the vitrimer and the substrate is formed by reaction of epoxy, amine and/or disulfide groups of the vitrimer and functional groups of the substrate or material of the substrate. The functional groups may be selected from the groups consisting of hydroxyl, epoxy, amine and thiol groups. Reference is made to the above statements on the first, second, third, fourth and fifth aspects of the invention, which apply analogously here.

In an seventh aspect, the present invention relates to the use of a vitrimer as adhesive, matrix resin and/or for surface functionalization and/or the use of a composition according to the first aspect of the invention as adhesive, matrix resin and/or for surface functionalization. In some embodiments, the vitrimer is a vitrimer according to the fourth or fifth aspect of the invention. In preferred embodiments, the vitrimer is used as adhesive, matrix resin and/or for surface functionalization in composites and especially in aircraft composites. The improved flame retardant properties, excellent Tg and modulus of elasticity of the vitrimers and compositions of the present invention, as described above, makes them particularly suitable for aircraft applications. Reference is made to the above statements on the first, second, third, fourth, fifth and sixth aspects of the invention, which apply analogously here.

In an eight aspect, the present invention relates to a flame retardant, comprising or consisting of a compound according to Formula (I) and/or a compound according to Formula (II), as defined above. Such compounds can be grafted and/or cross-linked into epoxy resins and/or disulfide vitrimers without compromising the Tg and modulus of elasticity. Reference is made to the above statements on the first, second, third, fourth, fifth, sixth and sevenths aspects of the invention, which apply analogously here.

The above embodiments can be combined arbitrarily, if appropriate. Further possible embodiments and implementations of the invention comprise also combinations of features not explicitly mentioned in the foregoing or in the following with regard to the Examples of the invention. Particularly, a person skilled in the art will also add individual aspects as improvements or additions to the respective basic form of the invention.

### Examples

The present invention will now be described in detail with reference to several examples thereof. However, these examples are illustrative and do not limit the scope of the invention.

### Exemplary preparation of flame retardants according to the invention

The flame retardant compounds according to Formulas (I) and (II) can be prepared by means of syntheses customary in the art and familiar to the person skilled in the art. In particular, DOPO (CAS 35948-25-5) or DOPO-HQ (CAS 99208-50-1), which are commercially available, can be reacted, for example, with epoxy groups, vinyl groups, hydroxy groups or amine groups to produce the flame retardants according to the present invention. The syntheses can, for example, be carried out analogue to the routes described by Y. Yang et al., Progress in Organic Coatings (2023), 175, 107316. Exemplary methods of synthesis are shown below, but are not limited thereto.

### Preparation Example 1

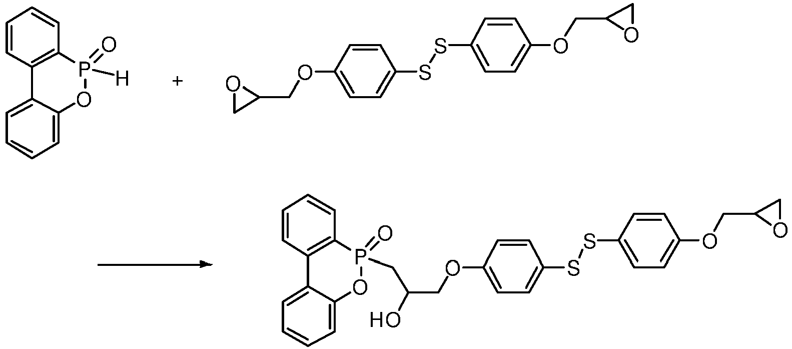

DOPO (CAS 35948-25-5) and 1,2-bis(4-(oxiran-2-ylmethoxy)phenyl)disulfane (CAS 17735-65-8) are commercially available. The reaction can be carried out analogue to X. Li et al., Composites Communications (2021), 25, 100754.

### Preparation Example 2

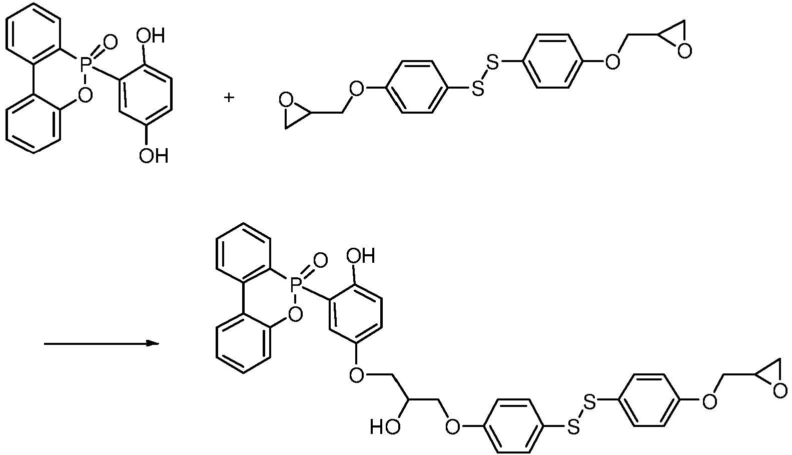

DOPO-HQ (CAS 99208-50-1) and 1,2-bis(4-(oxiran-2-ylmethoxy)phenyl)disulfane (CAS 17735-65-8) are commercially available.

In Preparation Examples 1 and 2, both epoxide groups of the 1,2-bis(4-(oxiran-2-ylmethoxy)phenyl)disulfane can also be reacted with DOPO, just as in Preparation Example 2 both hydroxyl groups of DOPO-HQ can also be reacted with the 1,2-bis(4-(oxiran-2-ylmethoxy)phenyl)disulfane.

### Preparation Example 3

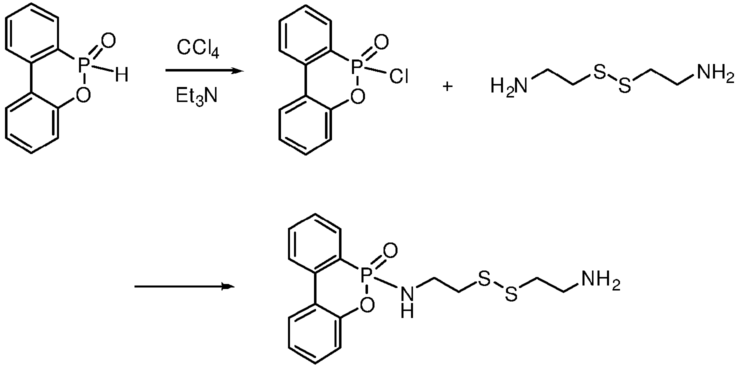

DOPO (CAS 35948-25-5) and cystamine (CAS 51-85-4) are commercially available. The preparation can be carried out via an Atherton-Todd reaction, see also Y. Yang et al., Progress in Organic Coatings (2023), 175, 107316. Both amines of the cystamine can also be converted.

### Exemplary preparation of compositions according to the invention

The preparation of the composition is not particularly limited. In particular, the components of the compositions may be mixed all at the same time or all successively or partially successively to obtain the composition according to the invention. By "components of the composition" is meant the resin forming compound, the optional curing agent and the flame retardant and optionally the tackifying agent, the chain extender and/or cross-linker, the toughener, the additive and/or the second flame retardant.

For example, 1,2-bis(4-(oxiran-2-ylmethoxy)phenyl)disulfane can be used as resin forming compound, which is commercially available (CAS 17735-65-8). Alternatively or in addition, bis naphtyl disulfide diglycidylether can be applied as resin forming compound, which can be prepared according to Preparation Example 4 below. As flame retardant, compounds according to Formula (I) or Formula (II) can be applied, which are available as described above. Alternatively or in addition, bis(diphenylphosphinothioyl)disulfide, bis(diphenylphosphoinothioyl)tetrasulfide, cabrolactamdisulfide, bis(benzothiazolyl)disulfide and diphenyl phosphionodithioate salts thereof, and bis(benzothiazolyl)tetrasulfide can be used as flame retardant, which are either commercially available or can be prepared as disclosed in J. Wagner, Halogenfreie Flammschutzmittelmischungen für Polystyrol-Schäume, Doctoral Thesis, Ruprecht-Karls-University Heidelberg, 2012. As curing agent, dithiodianilines such as 2,2'-dithiodianiline (1141-88-4) and/or 4,4'-dithiodianiline (CAS 722-27-0) can be used, which are commercially available. As tackifying agent, cystamine can be used (CAS 56-17-7), which is commercially available. Alternatively or in addition, diglycidyl ethyl disulfide can be applied as tackifying agent, which can be prepared according to Preparation Example 5 below. As chain extender and/or cross-linker, 1,4-benzene dithiol (CAS 624-39-5), naphthalene-2,6-dithiol (CAS 96892-95-4), 1,3,5-triazine-2,4,6-trithiol (CAS 17766-26-6) and/or 1,3,5-benzene thrithiol (CAS 38004-59-0) can be used, which are all commercially available.

### Preparation Example 4

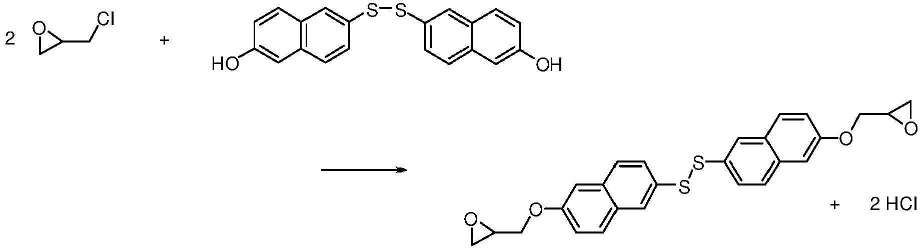

Epichlorohydrine (CAS 106-89-8) and bis(2-hydroxy-6-naphtyl) disulfide (CAS 6088-51-3) are commercially available.

### Preparation Example 5

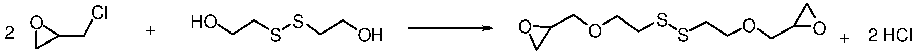

Epichlorohydrine (CAS 106-89-8) and 2-hydroxyethyl disulfide (CAS) 1892-29-1 are commercially available.

### Exemplary preparation of vitrimers and composites according to the invention

The vitrimers and composites according to the present invention can be prepared by means of curing, polymerization and cross-linking techniques customary in the art and familiar to the person skilled in the art. The compositions according to the present invention are cured, polymerized and/or cross-linked by methods as described above. The formed polymeric networks and vitrimers showed improved Tg, modulus, flame retardancy and retention of flame retardancy over time. In addition, the vitrimers and polymer networks were recyclable, with the flame retardant remaining bound.

## Claims

1. A composition, in particular a curable composition, comprising:
a resin forming compound comprising an epoxy group and/or an amine group;
optionally a curing agent; and
a first flame retardant comprising a disulfide group,
wherein at least one of the resin forming compound and the curing agent comprises a disulfide group.

2. The composition according to claim 1, wherein the first flame retardant is selected from the group consisting of 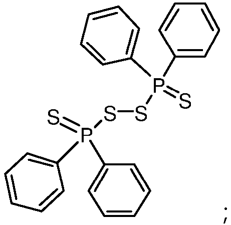 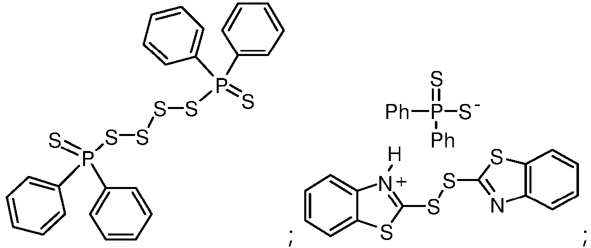 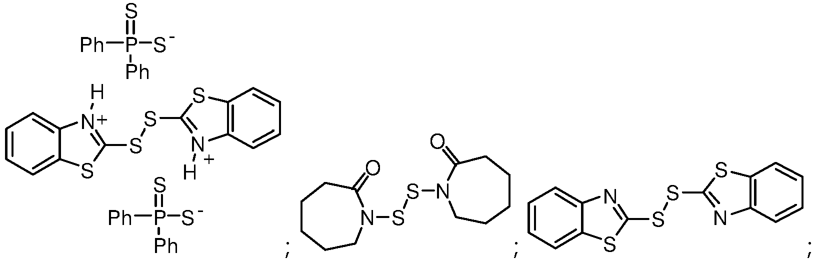 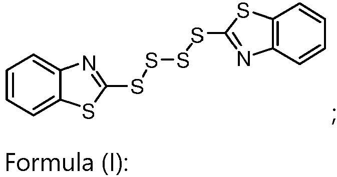 a flame retardant compound according to 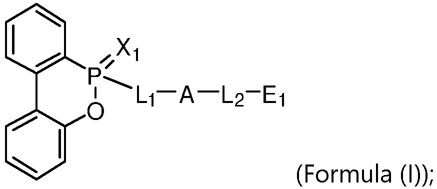 a flame retardant compound according to Formula (II): 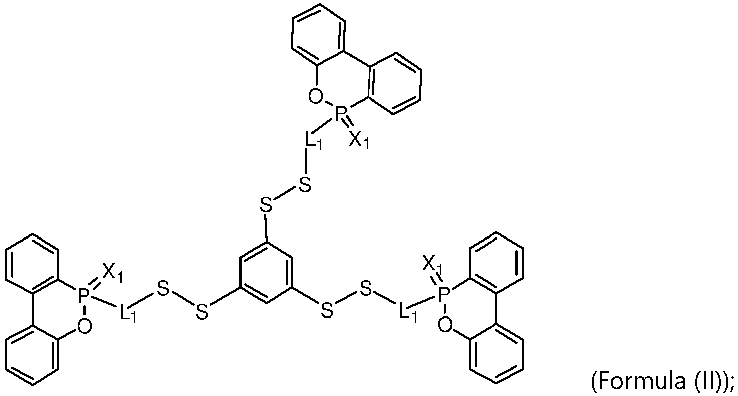 and combinations thereof, wherein in Formulas (I) and (II):
X₁ is O or S, A is a disulfide-containing group, L₁ and L₂ are linking groups,
and E₁ is selected from the group consisting of 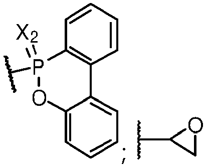 and 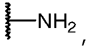 wherein X₂ is O or S.

3. The composition according to claim 2, wherein in Formulas (I) and/or (II):
A is selected from the group consisting of 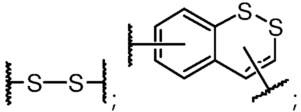 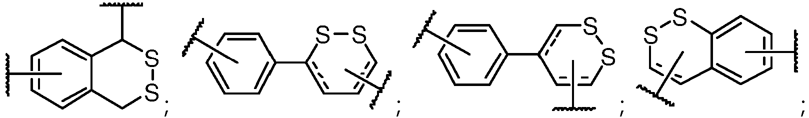 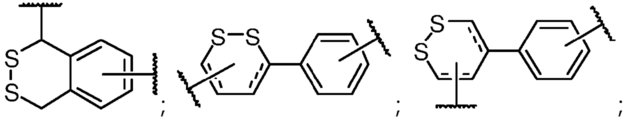 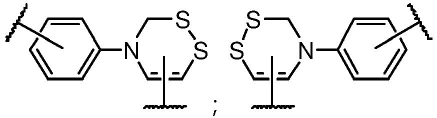 and analogue structures with four, five, seven and/or eight-membered rings, preferably five and/or seven membered rings,
L₁ is selected from the group consisting of 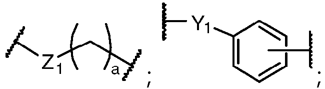 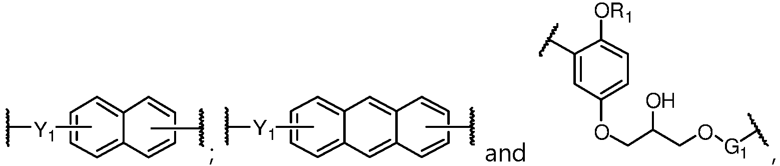 with a being an integer from 1 to 5, wherein Z₁ and Y₁ are each independently selected from the group consisting of a bond; 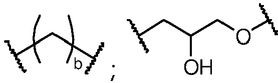 and 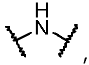 with b being an integer from 1 to 5, wherein G₁ is selected from the group consisting of 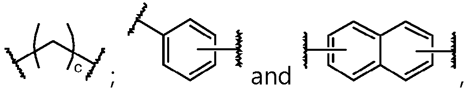 with c being an integer from 1 to 5, wherein R₁ is selected from the group consisting of H; C₁ to C₁₀ alkyl; C₆ to C₂₀ aryl and 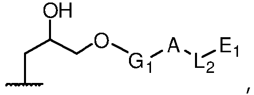
L₂ is selected from the group consisting of 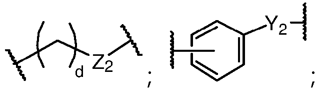 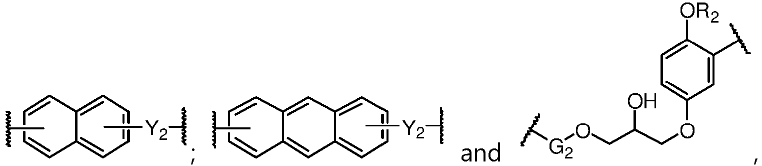 with d being an integer from 1 to 5, G₂ is selected from the group consisting of 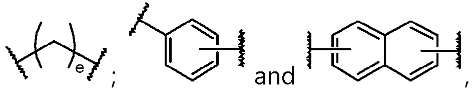 with e being an integer from 1 to 5, wherein R₂ is selected from the group consisting of H; C₁ to C₁₀ alkyl and C₆ to C₂₀ aryl,
wherein, when E₁ is 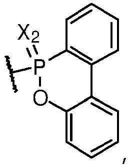 Z₂ and Y₂ are each independently selected from the group consisting of a bond; 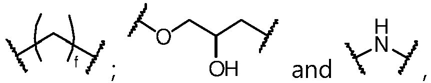 with f being an integer from 1 to 5, and when E₁ is 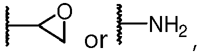 Z₂ and Y₂ are each independently selected from the group consisting of a bond, 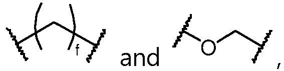 with f being an integer from 1 to 5,
optionally wherein the aromatic and/or aliphatic groups of A, L₁ and/or L₂ are optionally substituted with C₁ to C₆ alkyl groups, C₆ to C₂₀ aryl groups, C₆ to C₂₀ heteroaryl groups, hydroxyl groups, thiol groups, C₁ to C₁₀ ether groups and/or C₁ to C₁₀ ester groups.

4. The composition according to claim 2 or 3, wherein the flame retardant compound according to Formula (I) is 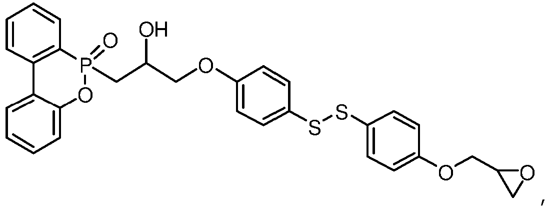 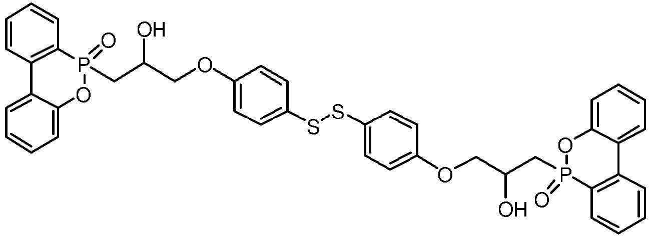 or 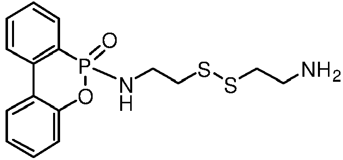 and/or wherein the compound according to

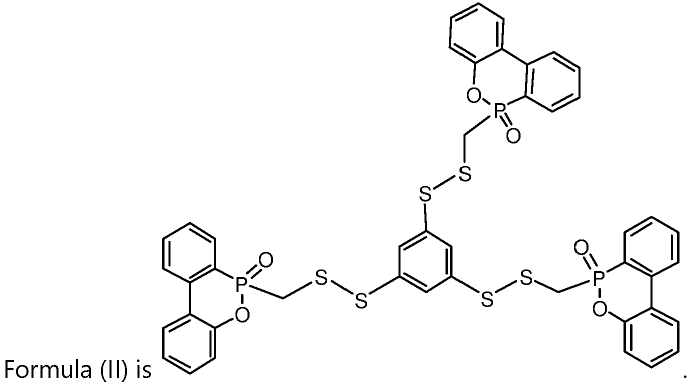

5. The composition according to any one of the preceding claims, wherein the resin forming compound is a vitrimer monomer, oligomer or pre-polymer.

6. The composition according to any one of the preceding claims, wherein the resin forming compound comprises an epoxy group, optionally wherein the resin forming compound is selected from the group consisting of 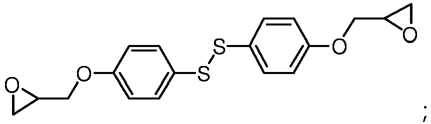 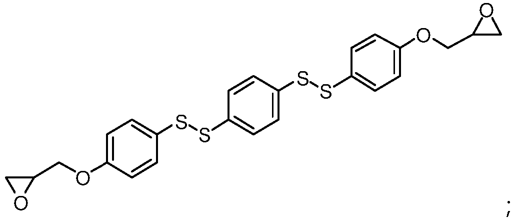 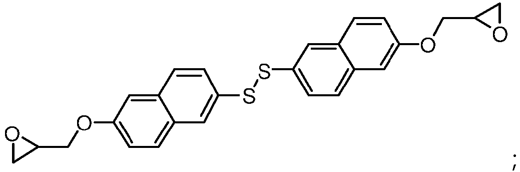 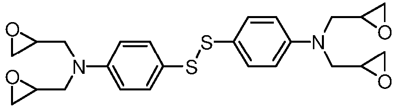 and combinations thereof.

7. The composition according to any one of the preceding claims, wherein the curing agent comprises an amine group, optionally wherein the curing agent is selected from the group consisting of 3,3'-diaminodiphenyl sulfone, 4,4'-diaminodiphenyl sulfone, 4,4'-methylenedianiline, isopropylamine, diisopropylamine, methyldiethanolamine, 2,2'-dithiodianiline, 3,3'-dithiodianiline, 4,4'-dithiodianiline, 2,3'-dithiodianiline, 2,3'-dithiodianiline and 3,4'-dithiodianiline.

8. The composition according to any one of the preceding claims, further comprising a tackifying agent comprising an epoxy group and/or an amine group, optionally wherein the tackifying agent further comprises a disulfide group, further optionally wherein the tackifying agent has a linear structure.

9. The composition according to claim 8, wherein the tackifying agent is selected from the group consisting of 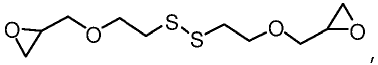 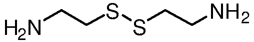 and combinations thereof.

10. The composition according to any one of the preceding claims, further comprising a chain extender and/or cross-linker comprising at least two thiol groups.

11. The composition according to claim 10, wherein the chain extender and/or cross-linker is selected from the group consisting of 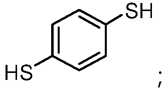 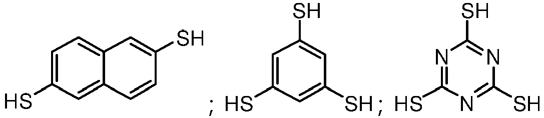 and combinations thereof.

12. The composition according to any one of the preceding claims, further comprising a toughener, an additive and/or a second flame retardant.

13. A method of manufacturing a polymeric network and/or vitrimer, the method comprising:
providing a composition according to any one of claims 1 to 12, polymerizing, co-polymerizing, cross-linking and/or curing the composition to obtain the polymeric network and/or vitrimer.

14. A vitrimer or composite, produced using the composition according to claims 1 to 12.

15. Use of a vitrimer according to claim 14 as adhesive, matrix resin or for surface functionalization, in particular in aircraft composites.
